(19)

**Europäisches Patentamt**
**European Patent Office**
**Office européen des brevets**

(11) **EP 4 725 657 A2**

(12) **EUROPEAN PATENT APPLICATION**

(43) Date of publication:
15.04.2026 Bulletin 2026/16

(21) Application number: 25202009.4

(22) Date of filing: 12.09.2025

(51) International Patent Classification (IPC):
**B25J 9/16** (2006.01)

(52) Cooperative Patent Classification (CPC):
**B25J 9/163; B25J 9/1661;** B25J 9/1612;
B25J 9/1671; B25J 9/1697

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 15.09.2024 US 202463694905 P

(71) Applicant: GDM Holding LLC
Mountain View CA 94043 (US)

(72) Inventors:
• XIAO, Ted
Mountain View, 94043 (US)

• KIRMANI, Sean
Mountain View, 94043 (US)
• DING, Tianli
Mountain View, 94043 (US)
• DRIESS, Danny Michael
Mountain View, 94043 (US)
• SADIGH, Dorsa
Mountain View, 94043 (US)
• SMITH, Laura
Mountain View, 94043 (US)

(74) Representative: Anderson, Oliver Ben et al
Venner Shipley LLP
200 Aldersgate
London EC1A 4HD (GB)

(54) **USING AFFORDANCE PLANS FOR ROBOT CONTROL**

(57) Implementations for robot control are provided. A method involves, based on vision data depicting an environment of a robot and a natural language instruction for the robot, determining an affordance plan for performing a task. The affordance plan comprises a sequence of intermediate representations of the robot in visual space, such as end effector poses. An action input prompt is assembled with data indicative of the vision data, the natural language instruction, and the affordance plan. The action input prompt is processed using one or more generative models to generate action output indicative of one or more actions to be performed by the robot. Subsequently, a robot control signal is generated based on the one or more actions. This provides a spatially precise and dimensionally concise form of guidance for robot manipulation tasks, which can improve performance and generalization.

Fig. 3

EP 4 725 657 A2

Processed by Luminess, 75001 PARIS (FR)

**Description**

**Background**

Developing robot policies that can generalize to a wide variety of tasks, objects, and environments is a significant challenge. One approach involves using large-scale models, such as vision-language-action (VLA) models, which are trained on extensive datasets of robot trajectories and web-scale data. These models can interpret high-level natural language instructions in the context of visual data to generate actions. However, policies conditioned solely on language instructions can be underspecified. Natural language often lacks the precise spatial information needed for fine-grained manipulation tasks, which can lead to failures in execution, such as grasping an object at an incorrect location. The performance of such models is also highly dependent on the volume and diversity of robot demonstration data, which is resource-intensive and costly to collect at scale.

To provide more specific guidance, other policy conditioning methods have been explored. For example, goal-conditioned policies utilize a goal image, which depicts the desired final state of a task, as an input to the policy model. While a goal image can provide detailed spatial information about the final configuration, this approach has several drawbacks. The high dimensionality of an image can make it a challenging input for a policy to learn from, a problem sometimes referred to as over-specification. Furthermore, providing a suitable goal image can be cumbersome for a user, and models may struggle to predict physically plausible goal images on their own. The goal image also only provides information about the final state, offering no guidance on the intermediate steps to achieve that state.

Other intermediate representations have been proposed to guide a policy through a task. These can include trajectory sketches or keypoints, which aim to provide a spatial plan for the robot to follow. While these representations can offer more guidance than a single language instruction or goal image, they may still lack sufficient detail for complex manipulation. For instance, a simple trajectory *sketch* might not convey the specific orientation of an end effector that is needed to successfully grasp an object with an unconventional shape, such as picking up a clothes hanger or a dustpan by its handle. Existing approaches therefore lack a method for providing task guidance that is both spatially precise and dimensionally concise, without being overly burdensome for a user to specify or for a model to learn from.

**Summary**

Implementations are described herein for learning robot control policy that is expressive and can represent a broad range of manipulation tasks, that enables non-expert users to specify tasks, and that facilitates generalization by leveraging knowledge from external data sources such as Internet data. More particularly, but not exclusively, techniques described herein relate to learning an affordance-conditioned policy model $\pi(a|l, o, q)$ that generates actions given the language instruction $l$, current image o, and additionally an affordance plan $q$. In various implementations, the affordance plan $q$ may be a sequence of intermediate representations of a robot in visual space. Accordingly, an affordance plan q may take various forms. In some implementations, an affordance plan q may take the form of a sequence of robot end effector poses from key timesteps in a trajectory, *i.e.* $q = (e_{t_1}, e_{t_2}, ..., e_{t_n})$. As used herein, "key timesteps" refers to the timesteps $t_i$ when the gripper state changes from open to close or vice versa from close to open, or the final timestep of the trajectory.

Key timesteps may correspond to semantically significant moments in the task execution, for example when the robot is about to come in contact with an object, or is about to stop contact with contacts. These timesteps may be represented in various ways, such as using tokenized text values passed as input to the policy, or by overlaying the timesteps onto the image o using a visual operator $\psi(o, q)$. With this visual operator $\psi$, each pose $e_i$ may be represented in the affordance plan q as a visual marker outline of the robot's two finger hand. For example, given $e_i$, the three-dimensional (3D) positions of the left fingertip, right fingertip, arm, and end effector tip may be computed and projected onto the two-dimensional (2D) image o.

The policy $\pi$ may be trained using behavior cloning, and in some cases may be co-trained using web datasets. Compared to conditioning solely using language $l$ and the vision data $o$, conditioning the affordance-conditioned policy model $\pi$ using $l$, $o$, and the affordance plan $q$ provides additional context about performance of a robotic task to the affordance-conditioned policy model $\pi$, including guidance on how to complete the task.

Affordance plans q may be generated manually by humans or automatically, *e.g.*, using an affordance prediction model $\phi(q|l, o)$, which predicts an affordance plan q based on the natural language instruction $l$ and the image $o$. In various implementations, the affordance prediction model $\phi$ may be trained by extracting $(o, l, q)$ tuples from the robot dataset $D$ that is also used to train affordance-conditioned policy model $\pi$, and/or different dataset(s) such as web datasets. In some implementations, the affordance prediction model $\phi$ may be further trained using an augmented dataset of images labeled with task labels, $D_{aug} = \{(o_i, l_i)\}_{i=0}^{n}$. These types of images can be collected in large numbers with relatively little expense, especially compared to other training data collection techniques like imitation learning using teleoperation of robots. In some implementations, images of the augmented dataset $D_{aug}$ may be annotated with visual annotations of affordance plans, *e.g.*, in a post hoc process that is either manual or performed with the aid of vision-language models (VLMs) and grasp planners.

In various implementations, vision data depicting the environment of a robot and a natural language instruction for a robot to perform a task may be obtained. This vision data may take various forms, such as a digital image captured by a digital camera or a point cloud captured by a light detection and ranging (LIDAR) sensor. The vision data may be captured using a vision sensor onboard the robot or separate from the robot in the robot's environment. The natural language instruction may be an instruction for a real or simulated robot to perform a task, such as "place the bowl in the drawer" or something similar.

The vision data and natural language instruction may be used to determine an affordance $q$ plan for performing the task. In various implementations, the affordance plan $q$ may include a sequence of intermediate representations of the robot in visual space that demonstrate, in relatively few dimensions, how the task should be performed. These intermediate representations may take various forms, such as tokenized text values or visual annotations incorporated into vision data. Tokenized text values may be useful in situations where intrinsics and/or extrinsics of the vision sensor are unknown or insufficiently understood. Visual annotations, on the other hand, may be used when camera extrinsics and/or intrinsics are known. Visual annotations may take various forms, such as a visual marker outline of an end effector of the robot (*e.g.,* a two-finger gripper in some instances), reference points of a robot, *etc.*

In some implementations, the affordance plan $q$ may be provided by a human manually. For example, the human may manually incorporate visual annotations onto one or more images of the robot's environment. Additionally or alternatively, the human may provide a demonstration of how to perform the task by teleoperating and/or manually manipulating operating a robot. In other implementations, the affordance plan $q$ may be generated automatically using the aforementioned affordance prediction model $\phi(q|l, o)$. For example, an affordance input prompt may be assembled with data indicative of the vision data $o$ and the natural language instruction $l$, and the affordance input prompt may be processed using the affordance prediction model $\phi$ to generate affordance output indicative of the affordance plan.

An action input prompt may then be assembled with data indicative of the vision data $o$, the natural language instruction $l$, and the affordance plan $q$. The action input prompt may be processed using a generative model such as the aforementioned affordance-conditioned policy model $\pi$ to generate action output. The action output may be indicative of action(s) to be performed by the robot, and may include, for instance, a sequence of action tokens that can be detokenized into a robot control signal. As one non-limiting example, in some implementations, the action space may include six degrees of freedom position rotational displacement of the robot end effector, *e.g.,* $\Delta pos_x$, $\Delta pos_y$, $\Delta pos_z$, $\Delta rot_x$, $\Delta rot_y$, $\Delta rot_z$, and/or the level of extension of the robot gripper (*e.g.,* "gripper_extension"), and, in some cases, a particular command for terminating the episode.

Generative model(s) described herein may take various forms, including, but not limited to, model(s) such as Gemini, Flamingo, PaLM, BERT, LaMDA, Meena, and/or any other single-modal or multimodal generative model, such as any other generative model that is encoder-only based, decoder-only based, sequence-to-sequence based and that optionally includes an attention mechanism or other memory, diffusion model(s), *etc.* Generative models may have hundreds of millions, or even hundreds of billions of parameters. In some implementations, generative models may include multi-modal models such as a vision language model (VLM) and/or a visual question answering (VQA) model, which can have any of the aforementioned architectures, and which can be used to process multiple modalities of data, particularly images and text, and/or images and audio for example, to generate one or more modalities of output. Non-limiting examples of generative models that may be used to generate robot control data are described in "RT-1: Robotics Transformer for Real-World Control at Scale" (arXiv:2212.06817) and "RT-2: Vision-Language-Action Models Transfer Web Knowledge to Robotic Control" (arXiv: 2307.15818), both which are incorporated herein by reference.

Further disclosed herein are systems and methods for robot control using affordance plans. The described approaches provide a spatially precise and dimensionally concise form of guidance for robot manipulation tasks, which can improve performance and generalization compared to conditioning a policy on underspecified or over-specified inputs.

In one aspect, a method involves determining an affordance plan for a robot to perform a task based on vision data depicting an environment of the robot and a natural language instruction. The affordance plan comprises a sequence of intermediate representations of the robot in visual space, such as a sequence of end effector poses. An action input prompt is assembled, which includes data indicative of the vision data, the natural language instruction, and the determined affordance plan. This action input prompt is then processed using one or more generative models to generate action output indicative of one or more actions for the robot to perform. Based on the one or more actions, a robot control signal is generated. The affordance plan can be determined automatically, for example, by processing an affordance input prompt using an affordance prediction model, or it can be received from a human operator.

In another aspect, a method for training an affordance-prediction model is provided. The method includes obtaining tuples from a robot dataset, where each tuple includes vision data, a natural language instruction, and a labeled affordance plan. An input prompt based on the vision data and natural language instruction from a tuple is assembled and processed by the affordance-prediction model to generate a predicted affordance plan. The model is then trained by comparing the predicted affordance plan with the labeled affordance plan from the tuple.

In a further aspect, a method for training an affordance-conditioned policy model is provided. A dataset of robot trajectories is obtained, with each trajectory including a natural language instruction, a sequence of visual representations, a sequence of actions, and gripper states. For a given trajectory, a corresponding affordance plan is determined. A training input prompt is assembled that includes the natural language instruction, one or more visual representations, and the affordance plan. This prompt is processed by the affordance-conditioned policy model to generate predicted actions, which are then compared to the actions from the trajectory to train or fine-tune the model.

In various implementations, a method implemented using one or more processors may be described. The method may include determining an affordance plan for performing a task, based on vision data depicting an environment of a robot and a natural language instruction for the robot. The affordance plan may include a sequence of intermediate representations of the robot in visual space. Data indicative of the vision data, the natural language instruction, and the affordance plan may be assembled as an action input prompt. The action input prompt may then be processed using one or more generative models to generate action output indicative of one or more actions to be performed by the robot. Subsequently, a robot control signal may be caused to be generated based on the one or more actions.

In further implementations, the action output may include a sequence of action tokens, and the robot control signal may be generated by detokenizing the sequence of action tokens to generate the one or more actions to be performed by the robot. The robot may then be operated based on the robot control signal. The robot may be a physical robot or a simulated robot operating in a simulated environment. The vision data may be captured using a vision sensor onboard the robot or by a vision sensor that is separate from the robot. For example, the vision data may include a digital image captured by a digital camera or a point cloud captured by a light detection and ranging (LIDAR) sensor.

In some implementations, determining the affordance plan may include assembling, as an affordance input prompt, data indicative of the vision data and the natural language instruction. The affordance input prompt may be processed using one or more of the generative models to generate affordance output indicative of the affordance plan. For instance, the action input prompt may be processed using an affordance-conditioned policy model, and the affordance input prompt may be processed using an affordance prediction model. The affordance-conditioned policy model may be trained using behavior cloning. In other implementations, determining the affordance plan may include receiving the affordance plan from a human, for instance, via manual demonstration by the human performing the task, via manual demonstration by the human operating the robot to perform the task, or as a sequence of visual annotations incorporated into the vision data by the human.

Each intermediate representation of the sequence of intermediate representations of the robot in visual space may be represented as a tokenized text value, or as a visual annotation incorporated into the vision data. In cases where visual annotations are used, the method may further include incorporating the visual annotations of the affordance plan into the vision data. Each visual annotation may include a visual marker outline of an end effector of the robot, such as a two-finger gripper. Each intermediate representation may also include an end effector pose.

Also described herein is a method of training an affordance-prediction model. The method may be implemented using one or more processors and may include obtaining one or more tuples from a robot dataset. Each tuple may include vision data depicting an environment of a robot, a natural language instruction for the robot to perform a task, and a labeled affordance plan for performing the task, where the labeled affordance plan includes a sequence of intermediate representations of the robot in visual space. Based on each tuple, an input prompt may be assembled that includes data indicative of the vision data of the tuple and the natural language instruction of the tuple. The input prompt may be processed using the affordance-prediction model to generate output indicative of a predicted affordance plan. The labeled affordance plan may be compared with the predicted affordance plan, and the affordance prediction model may be adapted based on the comparison.

In various implementations of the training method, each intermediate representation of the sequence of intermediate representations of the robot in visual space may be represented as a visual annotation incorporated into the vision data. The method may further include collecting a set of additional images, where each additional image has a corresponding task label that indicates a task being performed in the image. Each additional image may be annotated with an affordance plan including a sequence of visual annotations that demonstrate performance of the task of the corresponding task label. The affordance prediction model may then be further adapted based on the annotated additional images. The annotating may be performed by processing the additional images using a vision language model (VLM) or by processing the additional images using a grasp planner.

Additionally, a method of training an affordance-conditioned policy model is described. The method may be implemented using one or more processors and may include obtaining a dataset of robot trajectories. Each trajectory may include a natural language instruction for a robot to perform a task, a sequence of visual representations depicting a robot carrying out the task in an environment, a sequence of actions performed by the robot while carrying out the task, and a sequence of gripper states. For each trajectory, a respective affordance plan implemented in the robot trajectory may be determined. A training input prompt may be assembled that includes the natural language instruction, one or more visual representations of the sequence of visual representations, and the respective affordance plan. The training input prompt may be processed using an affordance-conditioned policy model to generate output that includes one or more predicted actions. One or more of the predicted actions may be compared to one or more actions of the sequence of actions associated with the trajectory. Based on the comparison, the affordance-conditioned policy model may be trained or fine-tuned, for instance, using behavior cloning. The affordance-conditioned policy model may be further trained using one or more web datasets of images.

Systems including one or more processors and memory storing instructions are also described herein. The instructions, in response to execution by the one or more processors, may cause the one or more processors to perform, or cause the performance of, any of the methods described previously. Further, at least one non-transitory computer-readable medium is described, which may include instructions that, in response to execution by one or more processors, cause the one or more processors to perform, or cause the performance of, any of the methods described previously.

**Brief Description of the Drawings**

Fig. 1 is a schematic diagram of an example system for affordance-based robot control.
Fig. 2 is an illustration of an example robot arm.
Fig. 3 is a schematic diagram illustrating how different reasoning processes can cooperate to determine an affordance plan.
Fig. 4 is a schematic diagram illustrating a hierarchical model for generating robot actions based on an affordance plan.
Fig. 5 is a flowchart illustrating an example method for generating robot control signals based on an affordance plan.
Fig. 6 is a flowchart illustrating an example method for training an affordance-prediction model.
Fig. 7 is a flowchart illustrating an example method for training an affordance-conditioned policy model.
Fig. 8 is a block diagram of an example computer system.

**Detailed Description**

Described herein are systems and methods for affordance-based policy learning. Technical advantages of techniques described herein may be to provide an intermediate policy interface that is expressive and compact for a range of manipulation tasks, can bridge knowledge from external datasets to facilitate generalization, and enables learning novel tasks using in-domain data that is efficient to collect. For example, a hierarchical policy may first propose an affordance plan through an affordance generator, and subsequently generate actions through an affordance-conditioned policy.

**A. Affordance-conditioned policies**

An affordance-conditioned policy model may be adapted (e.g., trained and/or fine-tuned) to generate actions based on a language instruction, a current image, and an affordance plan. The policy may be represented as a function that generates an action based on the language instruction, the current image, and the affordance plan. The affordance plan can be defined as a sequence of robot end effector poses at key timesteps in a trajectory. These key timesteps may capture critical stages of a task, such as moments of contact or bottleneck states. For instance, a key timestep may be identified when a gripper state changes (e.g., from a value indicating open to a value indicating closed, or vice versa) or at the final timestep of a trajectory. This approach may capture object-centric interactions, such as grasping or pushing. An affordance plan can provide precise spatial information, including orientation, which may be useful for fine-grained manipulation. To retain a full task context, the policy may be conditioned on both affordance plans and language, combining expressiveness with additional guidance.

In various implementations, an affordance-conditioned policy configured with selected aspects of the present disclosure may be trained using behavioral cloning. In some implementations, the training may include co-training on web datasets. Affordances can be represented in multiple forms. For example, an affordance may be represented as a tokenized text value. In another example, an affordance may be represented visually by being overlaid onto an image using a visual operator (*e.g.*, various graphic primitives, a visual representation of an end effector, *etc.*). In some implementations, an outline of a robot hand may be visually projected at specified poses onto an image. In some cases this projection may be accomplished by computing and projecting three-dimensional positions of fingertips, an end effector, and an arm onto a two-dimensional image, and then connecting these projected points to form an outline. Such a projection may utilize known robot camera intrinsics and extrinsics. In cases where this information is not available, tokenized text values may be used as the representation for the affordances.

**B. Learning to predict affordances**

In some implementations, the affordance-conditioned policy is deployed by a human user providing affordance plans and language goals. Affordance plans may be provided, for example, by visual marking on an image using a user interface. Compared to providing goal images or trajectory sketches, providing affordance plans may be facilitated by their lower dimensionality. Alternatively, models can be configured to predict affordance plans automatically, which can remove the need for human input at test time.

An affordance prediction model may be configured to predict an affordance plan given a language instruction and an initial scene image. This model can be a separate model or can be jointly learned with the policy as a single vision-language-action (VLA) model. To train the affordance prediction model, tuples including an image, a language instruction, and an affordance plan may be extracted from a robot dataset that is also used for policy training. The training process may also include co-training with web datasets. If these datasets are not sufficient, additional training data can be collected. For instance, a set of images with corresponding task labels can be obtained. This type of data collection can be less resource-intensive than collecting robot teleoperation data. After collection, each image in the additional dataset may be annotated with a corresponding affordance plan. This annotation can be performed through a post-hoc labeling procedure, which may be done manually via a user interface or with the aid of tools such as vision-language models (VLMs) and grasp planners. This annotation process can be efficient and may not require specialized robot hardware. The use of such additional data can improve downstream robot task performance, bypassing more costly robot teleoperation data collection methods.

During an inference procedure, an initial scene image and a natural language instruction for a task may be obtained. An affordance plan can then be acquired either from a human operator or from an affordance prediction model. In a configuration where the affordance prediction model is used, the model processes the initial scene image and the natural language instruction to generate the affordance plan. Subsequently, the affordance plan can be projected onto the image. A policy model then executes the specified task utilizing the natural language instruction and the image which has been annotated with the affordance plan. In some implementations, the affordance plan may be updated or replanned at specified or adaptive intervals to accommodate novel scenarios that may arise during policy execution.

Implementations disclosed herein are directed to determining an affordance plan for performing a task, based on vision data depicting an environment of a robot and a natural language instruction for the robot. The affordance plan includes a sequence of intermediate representations of the robot in visual space. Data indicative of the vision data, the natural language instruction, and the affordance plan is assembled as an action input prompt. One or more generative models then process the action input prompt to generate action output indicative of one or more actions to be performed by the robot. Finally, a robot control signal is caused to be generated based on the one or more actions.

Implementations disclosed herein can mitigate (*e.g.*, eliminate) various drawbacks with current techniques. For example, by using an affordance plan comprising a sequence of intermediate representations, such as end effector poses, the policy is provided with guidance that is both spatially precise and dimensionally concise, addressing the lack of detail in simple trajectory sk*et*ches or the over-specification of high-dimensional goal images. As another example, representing the affordance plan as a sequence of key poses, such as those indicating a specific orientation for an end effector, provides sufficient detail for complex manipulation tasks without being overly burdensome for a user to specify or a model to learn from.

As a non-limiting example of some implementations disclosed herein, consider a robot manipulator in a kitchen environment tasked with picking up a dustpan from a countertop. Vision data, such as a digital image from a camera on the robot, depicts the scene, including the dustpan and other objects. A human provides the natural language instruction, "pick up the dustpan." Based on this vision data and instruction, a system determines an affordance plan. This plan comprises a sequence of intermediate representations, specifically two end effector poses: a pre-grasp pose slightly above the dustpan's handle and a final grasp pose where the robot's gripper is correctly positioned and oriented around the handle. Data indicative of the image, the text instruction, and these two poses (the affordance plan) are assembled into an action input prompt. This prompt is then processed by a generative model, which outputs a sequence of actions, such as Cartesian end-effector movements and gripper state changes, needed to execute the grasp. Finally, a robot control signal is generated from these actions, causing the robot to approach the dustpan, align its gripper with the handle according to the affordance plan, grasp it, and lift it.

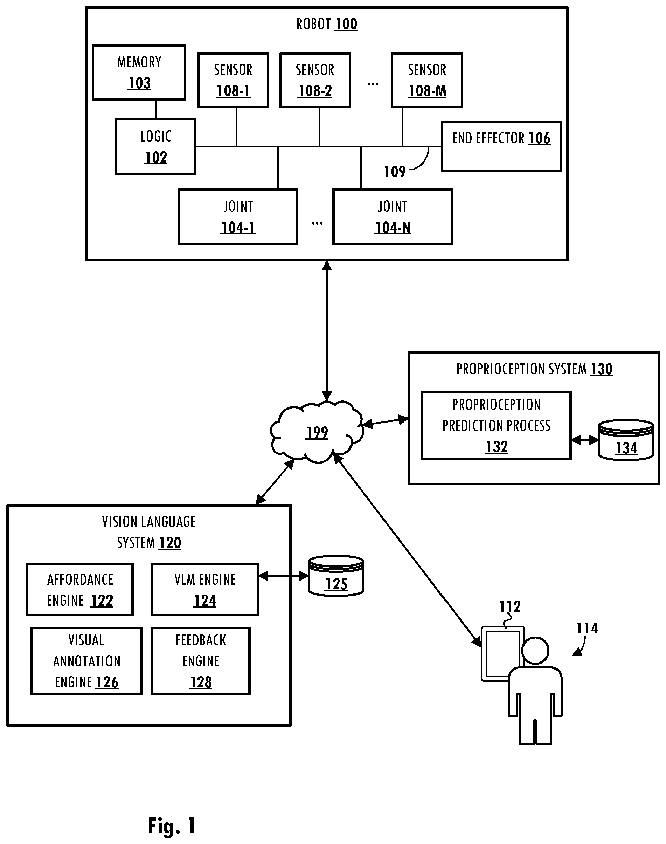

Fig. 1 is a schematic diagram components that can cooperate to carry out selected aspects of the present disclosure, in accordance with various implementations. The various components depicted in Fig. 1, particularly those components forming a vision language system 120 and a proprioception system 130, may be implemented using any combination of hardware and software. The components of Fig. 1 are depicted as being communicatively coupled with each other via one or more networks 199, which may include one or more personal area networks, local area networks, and/or wide area networks (*e.g.*, the Internet). However, this is not meant to be limiting. Various aspects of the present disclosure that are described as being performed by and/or stored on systems 120 and/or 130 can alternatively be performed by and/or stored on a single system, such as vision language system 120, or on any combinations of systems 120 and 130.

In some implementation, techniques described herein may be used to control various types of machines or apparatus. For example, in some implementations, a robot 100 may be in communication with systems 120 and/or 130. In various implementations, and/or all or parts of systems 120 and/or 130 may be implemented onboard robot 100. Other types of machines or apparatus that are not depicted in Fig. 1 may also be controlled using selected aspects of the present disclosure, such as autonomous vehicles, industrial equipment, climate control systems, medical systems and/or devices, video games, and so forth.

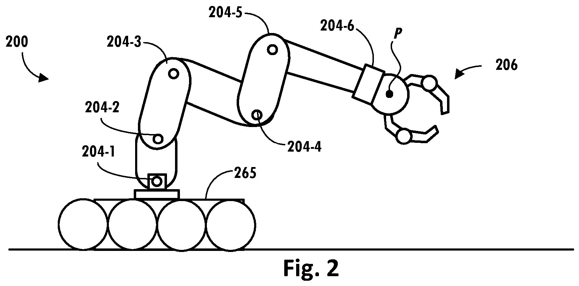

Robot 100 may take various forms, including but not limited to a telepresence robot (*e.g.*, which may be as simple as a wheeled vehicle equipped with a display and a camera), a robot arm, a multi-pedal robot such as a "robot dog," an aquatic robot, a wheeled device, a submersible vehicle, an unmanned aerial vehicle ("UAV"), and so forth. One non-limiting example of a mobile robot arm is depicted in Fig. 2. In various implementations, robot 100 may include logic 102. Logic 102 may take various forms, such as a real time controller, one or more processors, one or more field-programmable gate arrays ("FPGA"), one or more application-specific integrated circuits ("ASIC"), and so forth. In some implementations, logic 102 may be operably coupled with memory 103. Memory 103 may take various forms, such as random-access memory ("RAM"), dynamic RAM ("DRAM"), read-only memory ("ROM"), Magnetoresistive RAM ("MRAM"), resistive RAM ("RRAM"), NAND flash memory, and so forth. In some implementations, a robot controller may include, for instance, logic 102 and memory 103 of robot 100.

In some implementations, logic 102 may be operably coupled with one or more joints 104-1 to 104-N, one or more end effectors 106, and/or one or more sensors 108-1 to 108-M, *e.g.*, via one or more buses 109. As used herein, "joint" 104 of a robot may broadly refer to actuators, motors (*e.g.*, servo motors), shafts, gear trains, pumps (*e.g.*, air or liquid), pistons, drives, propellers, flaps, rotors, or other components that may create and/or undergo propulsion, rotation, and/or motion. Some joints 104 may be independently controllable, although this is not required. In some instances, the more joints robot 100 has, the more degrees of freedom of movement it may have.

As used herein, "end effector" 106 may refer to a variety of tools that may be operated by robot 100 in order to accomplish various tasks. For example, some robots may be equipped with an end effector 106 that takes the form of a claw with two opposing "fingers" or "digits." Such a claw is one type of "gripper" known as an "impactive" gripper. Other types of grippers may include but are not limited to "ingressive" (*e.g.*, physically penetrating an object using pins, needles, *etc.*), "astrictive" (*e.g.*, using suction or vacuum to pick up an object), or "contigutive" (*e.g.*, using surface tension, freezing or adhesive to pick up object). More generally, other types of end effectors may include but are not limited to drills, brushes, force-torque sensors, cutting tools, deburring tools, welding torches, containers, trays, and so forth. In some implementations, end effector 106 may be removable, and various types of modular end effectors may be installed onto robot 100, depending on the circumstances. Some robots, such as some telepresence robots, may not be equipped with end effectors. Instead, some telepresence robots may include displays to render visual representations of the users controlling the telepresence robots, as well as speakers and/or microphones that facilitate the telepresence robot "acting" like the user.

Sensors 108-1 to 108-M may take various forms, including but not limited to 3D laser scanners (*e.g.*, light detection and ranging, or "LIDAR") or other 3D vision sensors (*e.g.*, stereographic cameras used to perform stereo visual odometry) configured to provide depth measurements, two-dimensional cameras (*e.g.*, RGB, infrared), light sensors (*e.g.*, passive infrared), force sensors, pressure sensors, pressure wave sensors (*e.g.*, microphones), proximity sensors (also referred to as "distance sensors"), depth sensors, torque sensors, barcode readers, radio frequency identification ("RFID") readers, radars, range finders, accelerometers, gyroscopes, compasses, position coordinate sensors (*e.g.*, global positioning system, or "GPS"), speedometers, edge detectors, Geiger counters, and so forth. While sensors 108-1 to 108-M are depicted as being integral with robot 100, this is not meant to be limiting.

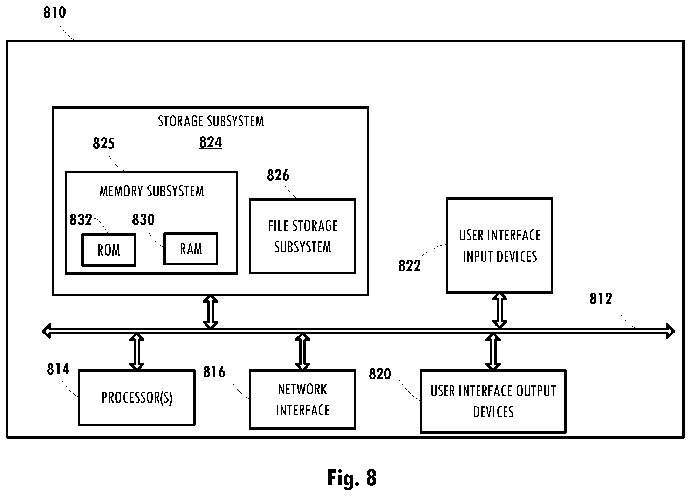

In some implementations, vision language system 120 and/or proprioception system 130 may include one or more computing devices cooperating to perform selected aspects of the present disclosure. An example of such a computing device is depicted schematically in Fig. 8. In some implementations, one or more of systems 120 and/or 130 may include one or more servers forming part of what is often referred to as a "cloud" infrastructure, or simply "the cloud." Alternatively, one or more components of systems 120 and/or 130 may be operated by logic 102 of robot 100.

Machine learning model(s) described herein may take various forms, including, but not limited to, generative language model(s) (sometimes referred to as "large language models," or "LLMs") such as PaLM, BERT, LaMDA, Meena, and/or any other generative language model, such as any other generative model that is encoder-only based, decoder-only based, sequence-to-sequence based and that optionally includes an attention mechanism or other memory. In generative model form, machine learning model(s) may have hundreds of millions, or even hundreds of billions of parameters. In some implementations, machine learning model(s) may include a multi-modal model such as a VLM and/or a visual question answering (VQA) model, which can have any of the aforementioned architectures, and which can be used to process multiple modalities of data, particularly images and text, and/or images and audio for example, to generate one or more modalities of output. Non-limiting examples of VLMs that may be applied as described herein include Gemini and/or Flamingo, to name a few.

Vision language system 120 may include an affordance engine 122, VLM engine 124, one or more VLMs 125, a visual annotation engine 126, and a feedback engine 128. Any of engines 124, 126, and/or 128 may be implemented using any combination of hardware and software. Moreover, any of engines 124, 126, and/or 128 may be combined with other(s) of engines 124, 126, and/or 128.

In various implementations, affordance engine 122 may be configured to generate an affordance plan indicative of the location and pose of one or more end effectors 106 of robot 100 over one or more timesteps. In various implementations, the affordance plan may be visually represented as an outline of a robot hand (*e.g.,* of end effector(s) 106) projected over one or more images. In other implementations, affordance engine 122 may be configured to identify the affordance plan(s) automatically. In such implementations, affordance engine 122 may be operably coupled with an affordance prediction model (*e.g.,* one or more VLMs 125) that is trained to predict affordance plans based on images or other sensor data and natural language instructions or other goal instructions.

Visual annotation engine 126 may be configured to generate a visual annotation of the one or more affordance plans over the one or more images. In some implementations, visual annotation engine 126 may overlay the one or more affordances on an image, *e.g.*, with an outline or other indicator for each affordance. For example, the visual annotation may be placed in a "task field" that is overlayed onto an image depicting a person's hand to denote where manipulation will occur during teleoperation. As will be described in more detail below, in some implementations one or more images annotated in this manner (*e.g.*, with affordances) may be provided to a policy model to effectuate execution of a task on robot 100. In various implementations, visual annotation engine 126 can generate the visual annotation based on one or more affordance plans generated by affordance engine 122 and an image or other sensor data from sensors 108-1 to 108-M.

Feedback engine 128 may be configured to obtain user feedback indicative of whether the generated visual annotation is correct. The user feedback may be provided by a human user, *e.g.,* via a user interface, and may reflect whether the visual annotation (*e.g.,* the affordances) are accurate or inaccurate with regard to the task being performed. Feedback engine 128 may be configured to provide the user feedback to the prediction model. In some implementations, feedback engine 128 may obtain the user feedback in response to a request, *e.g.,* via a user interface. In other implementations, feedback engine 128 may obtain the user feedback via an API.

Proprioception system 130 may be present in some implementations where robot 100 is being controlled using techniques described herein, *e.g.,* where vision language system 120 is not capable of directly generating robot control data, but instead generates intermediate data (*e.g.,* a plan that includes a sequence of actions) that is then processed by proprioception system 130 to obtain output usable to control robot 100, *e.g.,* control signals for individual joints 104-1 to 104-N and/or end effector(s) 106. Proprioception system 130 may be omitted in other circumstances, such as when vision language system 120 is capable of directly generating robot control data. Proprioception system 130 may include a proprioception prediction process 132 and one or more proprioception machine learning models 134. An example of a proprioception machine learning model that may be used is described in "RT-1: Robotics Transformer for Real-World Control at Scale" (arXiv:2212.06817).

In various implementations, proprioception prediction process 132 may process input tokens indicative of a current (or past) proprioception values of robot 100, *e.g.,* along with other data such as data indicative of a task or action to be performed (*e.g.,* an action sampled and selected as described herein), state data of the robot's environment, *etc.,* to generate robot control data and/or predict future proprioception values of robot 100. These robot control data and/or future proprioception values may be used to operate robot 100. "Robot control data" may include, for instance, low-level actuator commands (also referred to as "joint commands," and may include torque commands) that directly control the actuators/joints 104-1 to 104-N of the robot, cartesian commands that specify direction(s) for an end effector 106, a target robot pose, code that specifies reward functions that a motion controller can optimize (*e.g.,* using techniques such as receding horizon optimization) to find optimal low-level actuator commands, selected predefined robot primitives, and so forth. In some cases, robot logic 102 may be configured to convert between joint commands and Cartesian commands, *e.g.,* using forward and/or inverse kinematics.

In various implementations, a user 112 may control robot 100 using a client device 114. While depicted as a tablet computer or smart phone in Fig. 1, client device 114 may take other forms, such as a desktop or laptop computer, in-vehicle computing device, augmented reality (AR) and/or virtual reality (VR) headset or glasses, standalone "smart" speakers that host automated assistants that can be interacted with to control robot 100, *etc.* In various implementations, user 112 may issue one or more natural language commands, *e.g.,* by typing the commands or uttering the commands aloud and having those spoken utterances transcribed using speech-to-text (STT) processing. These natural language commands may specify a task to be completed by robot 100 in an environment in which robot 100 operates. For example, user 112 may ask robot 100 to "pick up the helix-shaped dog chew toy," "close the windows," "take the dishes from the table to the sink," *etc.*

Fig. 2 depicts a non-limiting example of a robot 200 in the form of a robot arm. An end effector 206 in the form of a gripper claw is removably attached to a sixth joint 204-6 of robot 200. In this example, six joints 204-1 to 204-6 are indicated. However, this is not meant to be limiting, and robots may have any number of joints. In some implementations, robot 200 may be mobile, *e.g.*, by virtue of a wheeled base 255 or other locomotive mechanism. Robot 200 is depicted in Fig. 2 in a particular selected configuration or "pose."

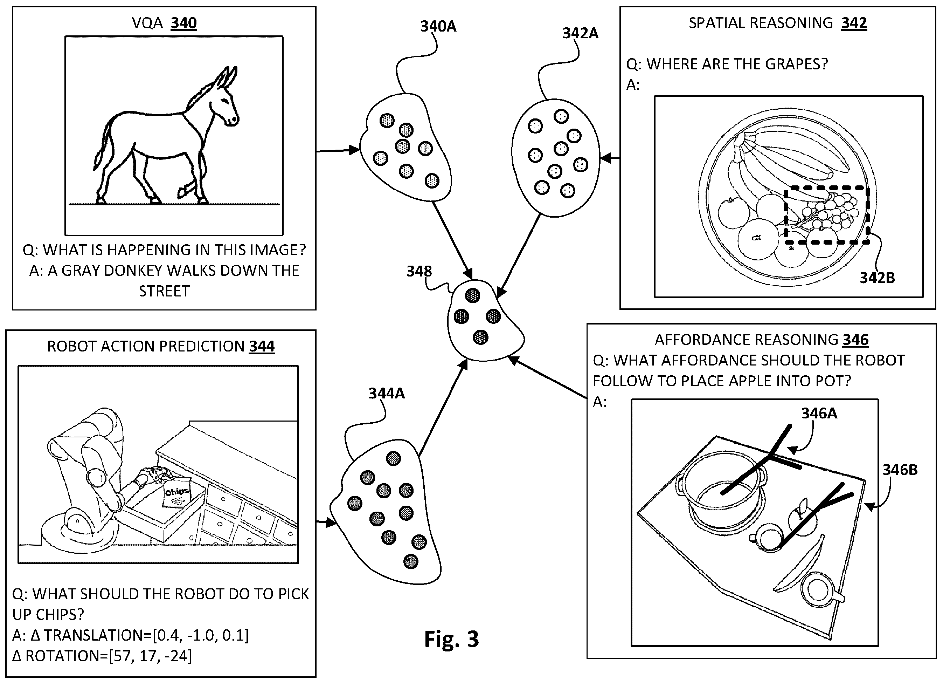

Fig. 3 is a schematic diagram illustrating how various reasoning processes can cooperate to determine an affordance plan and subsequent robot actions, in accordance with various implementations. The diagram demonstrates how affordances may be used to connect robot actions with web content by facilitating knowledge transfer from web datasets to robotic reasoning tasks. An initial visual question answering (VQA) process 340 may process an image and a natural language query to produce an output (depicted as a small shaded circle) in latent space 340A, which captures general semantic understanding of a scene. This general understanding can be refined through more specific reasoning processes that are also trainable on web data.

For example, a spatial reasoning process 342 may take the image as input to determine spatial relationships between objects, producing an output in a spatial reasoning latent space 342A and, in some cases, a visual annotation such as a bounding box 342B depicted in Fig. 3. Concurrently, a robot action prediction process 344 may reason about potential robot actions based on an image, producing its own output (small circles) in robot action prediction latent space 344A. An affordance reasoning process 346 (which may or may not be implemented by affordance engine 122) can leverage the outputs of these web-trainable processes to determine a specific affordance plan for a given task. The affordance reasoning process 346 can generate specific intermediate representations, such as projected annotations 346A and 346B that represent one or more effectors (*e.g.,* the same end effector at different moments in time). By combining the latent space outputs from VQA latent space 340A, spatial reasoning latent space 342A, and robot action prediction latent space 344A, an ultimate affordance output can be predicted in affordance latent space 348. This ultimate output (*e.g.,* one of the dark circles) in affordance latent space 348 represents a spatially precise and semantically grounded plan for the robot. Incorporating affordance reasoning explicitly in this manner allows knowledge learned from large-scale web datasets (*e.g.*, related to object detection, spatial relationships, and general scene understanding) to be effectively transferred and applied to specific robot control tasks, thereby bridging the gap between abstract web content and concrete physical actions.

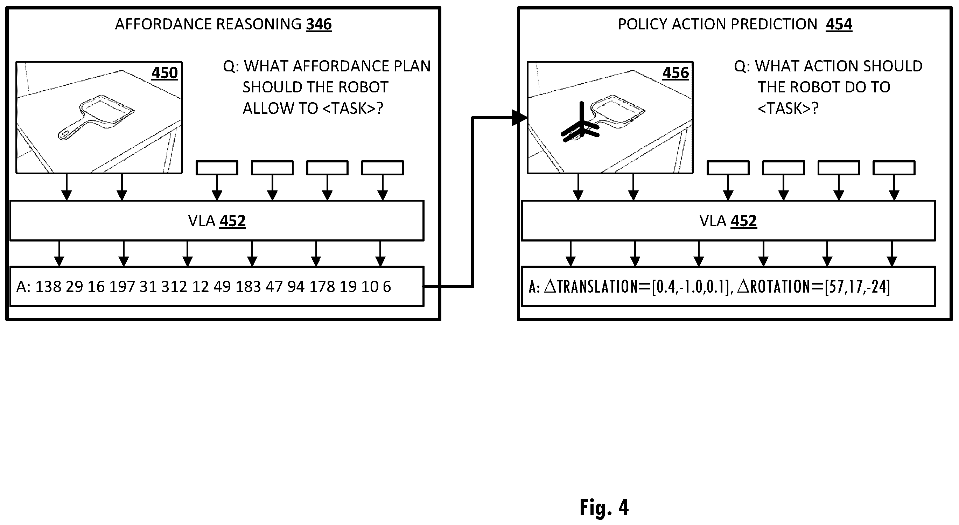

Fig. 4 is a schematic diagram illustrating a hierarchical model for generating robot actions based on an affordance plan, in accordance with various implementations. The diagram depicts two main processes: the aforementioned affordance reasoning process 346 and a policy action prediction process 454.

On the left, an affordance reasoning process 346 determines an affordance plan. In this example, an affordance input prompt is assembled from data indicative of vision data, such as an image 450 depicting a dustpan on a table, and a natural language instruction, represented as a query like, "What affordance plan should the robot allow to <task>?". The task, for instance, can be to pick up the dustpan. This affordance input prompt is processed by a generative model, such as a vision-language-action (VLA) model 452, to generate affordance output indicative of the affordance plan. The affordance plan may include, for instance, a sequence of intermediate representations of the robot in visual space, which can be, for example, a sequence of end effector poses.

The generated affordance plan is then incorporated into the vision data. For example, the intermediate representations of the affordance plan may be represented as a visual annotation, which is projected onto image 450 to produce an annotated image 456. The visual annotation may comprise a visual marker outline of an end effector of the robot, such as a two-finger gripper. In Fig. 4, the visual annotation shows an outline of a gripper positioned over the handle of the dustpan, indicating a suitable pose for grasping.

On the right, a policy action prediction process 454 generates one or more actions for the robot. An action input prompt is assembled from data indicative of the vision data (*e.g.,* annotated image 456), the natural language instruction (*e.g.*, a query like "What action should the robot do to <task>?"), and the determined affordance plan. This action input prompt is processed using one or more generative models, such as VLA 452 or a different model such as an affordance-conditioned policy model, to generate action output. The action output is indicative of one or more actions to be performed by the robot. For example, the action output may include robot control data, such as a translation and rotation pose for an end effector of the robot, which can be used to cause a robot control signal to be generated.

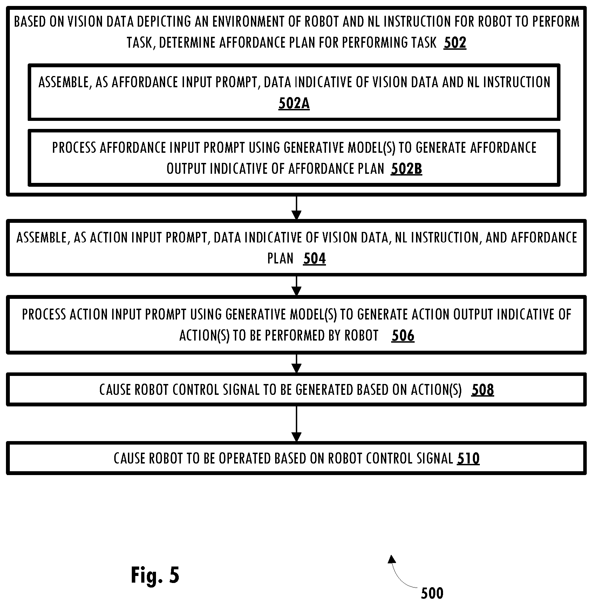

Fig. 5 is a flowchart illustrating a method 500 for practicing the operations of selected aspects of the present disclosure. While Fig. 5 depicts the operations of method 500 being performed in a particular order for purposes of illustration, it will be appreciated that other orders of the operations (in terms of time, process flow, *etc.*) are possible and contemplated herein. Moreover, one or more operations of method 500 may be omitted during performance of method 500 in various implementations. For convenience, the operations of method 500 will be described as being performed by a system, which may include, for instance, aspects of vision language system 120 and/or proprioception system 130.

At block 502, the system may, based on vision data depicting an environment of a robot 100 and a natural language instruction for the robot 100 to perform a task, determine an affordance plan for performing the task, wherein the affordance plan includes a sequence of intermediate representations of the robot 100 in visual space. The vision data may be captured using a vision sensor 108 onboard the robot 100 or a vision sensor that may be separate from the robot 100. For example, the vision data may be a digital image captured by a digital camera or a point cloud captured by a light detection and ranging (LIDAR) sensor. Each intermediate representation of the sequence may be an end effector pose for an end effector 106 of the robot 100. In some implementations, determining the affordance plan may be performed by an affordance engine 122. For instance, at block 502A, the system may assemble, as an affordance input prompt, data indicative of the vision data and the natural language instruction. At block 502B, the system may process the affordance input prompt using one or more generative models 125, such as an affordance prediction model, to generate affordance output indicative of the affordance plan. In other implementations, determining the affordance plan may include receiving the affordance plan from a human 112, for example, via manual demonstration by the human 112 performing the task, via manual demonstration by the human 112 operating the robot 100 to perform the task, or as a sequence of visual annotations incorporated into the vision data by the human 112. The intermediate representations may be represented as tokenized text values. Alternatively, the intermediate representations may be represented as visual annotations incorporated into the vision data. These visual annotations may be generated by a visual annotation engine 126 and may include a visual marker outline of the end effector 106 of the robot 100, which may be a two-finger gripper.

At block 504, the system may assemble, as an action input prompt, data indicative of the vision data, the natural language instruction, and the affordance plan. For implementations where the affordance plan is represented as visual annotations, the system may first incorporate the visual annotations of the affordance plan into the vision data, for instance to generate an annotated image 456.

At block 506, the system may process the action input prompt using one or more generative models 125 to generate action output indicative of one or more actions to be performed by the robot 100. For instance, the system may process the action input prompt using an affordance-conditioned policy model. In some implementations, the affordance-conditioned policy model may be trained using behavior cloning. The action output may include a sequence of action tokens.

At block 508, the system may cause a robot control signal to be generated based on the one or more actions. For example, where the action output includes a sequence of action tokens, the robot control signal may be generated by detokenizing the sequence of action tokens to generate the one or more actions to be performed by the robot 100. At block 510, the system may subsequently operate the robot 100 based on the robot control signal. The robot 100 may be a physical robot or a simulated robot operating in a simulated environment.

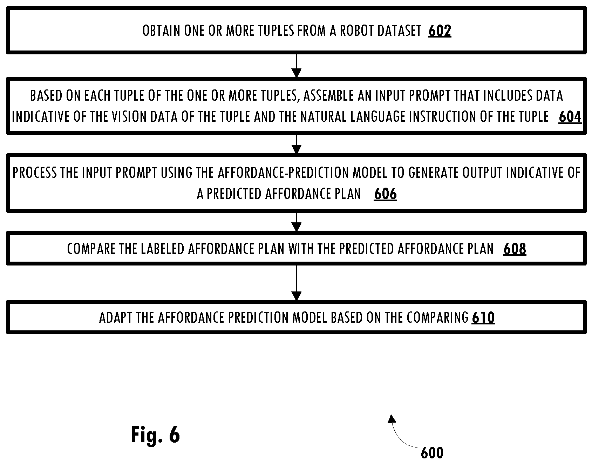

Fig. 6 is a flowchart illustrating a method 600 for adapting an affordance-prediction model. While Fig. 6 depicts the operations of method 600 being performed in a particular order for purposes of illustration, it will be appreciated that other orders of the operations are possible and contemplated herein. Moreover, one or more operations of method 600 may be omitted during performance of method 600 in various implementations. For convenience, the operations of method 600 will be described as being performed by a system, which may include, for instance, aspects of vision language system 120.

At block 602, the system may obtain one or more tuples from a robot dataset. Each tuple may include vision data depicting an environment of a robot 100, a natural language instruction for the robot 100 to perform a task, and a labeled affordance plan for performing the task. The labeled affordance plan may include a sequence of intermediate representations of the robot 100 in visual space. In some implementations, each intermediate representation of the sequence of intermediate representations of the robot 100 in visual space may be represented as a visual annotation incorporated into the vision data.

At block 604, the system may, based on each tuple of the one or more tuples, assemble an input prompt that includes data indicative of the vision data of the tuple and the natural language instruction of the tuple.

At block 606, the system may process the input prompt using the affordance-prediction model to generate output indicative of a predicted affordance plan. The affordance-prediction model may be one of the VLMs 125.

At block 608, the system may compare the labeled affordance plan with the predicted affordance plan.

At block 610, the system may adapt (*e.g.*, train, fine-tune, condition in context) the affordance prediction model based on the comparing. In some implementations, the system may also collect a set of additional images, where each additional image may have a corresponding task label that indicates a task being performed in the image. The system may annotate each additional image with an affordance plan including a sequence of visual annotations that demonstrate performance of the task of the corresponding task label. The annotating may be performed by processing the additional images using a vision language model (VLM) 125 or by processing the additional images using a grasp planner. The system may then further adapt the affordance prediction model based on the annotated additional images.

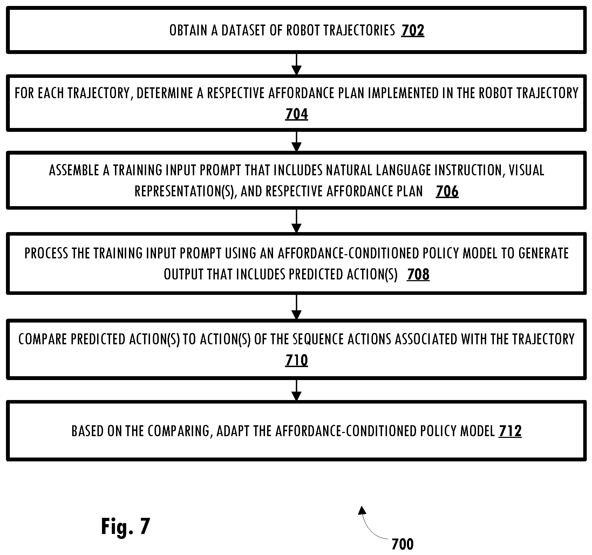

Fig. 7 is a flowchart illustrating a method 700 for adapting an affordance-conditioned policy model. While Fig. 7 depicts the operations of method 700 being performed in a particular order for purposes of illustration, it will be appreciated that other orders of the operations are possible and contemplated herein. Moreover, one or more operations of method 700 may be omitted during performance of method 700 in various implementations. For convenience, the operations of method 700 will be described as being performed by a system, which may include, for instance, aspects of vision language system 120.

At block 702, the system may obtain a dataset of robot trajectories. Each trajectory may include a natural language instruction for a robot 100 to perform a task, a sequence of visual representations depicting a robot 100 carrying out the task in an environment, a sequence of actions performed by the robot 100 while carrying out the task, and a sequence of gripper states for an end effector 106.

At block 704, the system may, for each trajectory, determine a respective affordance plan implemented in the robot trajectory.

At block 706, the system may assemble a training input prompt that includes the natural language instruction, one or more visual representations of the sequence of visual representations, and the respective affordance plan.

At block 708, the system may process the training input prompt using an affordance-conditioned policy model to generate output that includes one or more predicted actions.

At block 710, the system may compare one or more of the predicted actions to one or more actions of the sequence of actions associated with the trajectory.

At block 712, the system may, based on the comparing, adapt (*e.g.*, train or fine-tune) the affordance-conditioned policy model. In some implementations, the training or fine-tuning may include behavior cloning. In some cases, the affordance-conditioned policy model may be further trained using one or more web datasets of images.

Fig. 8 is a block diagram of an example computer system 810. Computer system 810 typically includes at least one processor 814 that communicates with a number of peripheral devices via bus subsystem 812. These peripheral devices may include a storage subsystem 824, including, for example, a memory subsystem 825 and a file storage subsystem 826, user interface output devices 820, user interface input devices 822, and a network interface subsystem 816. The input and output devices allow user interaction with computer system 810. Network interface subsystem 816 provides an interface to outside networks and is coupled to corresponding interface devices in other computer systems.

User interface input devices 822 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computer system 810 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 810 to the user or to another machine or computer system.

Storage subsystem 824 stores programming and data constructs that provide the functionality of some or all of the modules described herein. For example, the storage subsystem 824 may include the logic to perform one or more of the methods described herein.

These software modules are generally executed by processor 814 alone or in combination with other processors. Memory 825 used in the storage subsystem can include a number of memories including a main random access memory (RAM) 830 for storage of instructions and data during program execution and a read only memory (ROM) 832 in which fixed instructions are stored. A file storage subsystem 826 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 826 in the storage subsystem 824, or in other machines accessible by the processor(s) 814.

Bus subsystem 812 provides a mechanism for letting the various components and subsystems of computer system 810 communicate with each other as intended. Although bus subsystem 812 is shown schematically as a single bus, alternative implementations of the bus subsystem may use multiple busses.

Computer system 810 can be of varying types including a workstation, server, computing cluster, blade server, server farm, or any other data processing system or computing device. Due to the ever-changing nature of computers and networks, the description of computer system 810 depicted in Fig. 8 is intended only as a specific example for purposes of illustrating some implementations. Many other configurations of computer system 810 are possible having more or fewer components than the computer system depicted in Fig. 8.

This specification includes the following enumerated examples:

Example 1. A method implemented using one or more processors and comprising:

based on vision data depicting an environment of a robot and a natural language instruction for the robot to perform a task, determining an affordance plan for performing the task, wherein the affordance plan comprises a sequence of intermediate representations of the robot in visual space;

assembling, as an action input prompt, data indicative of the vision data, the natural language instruction, and the affordance plan;

process the action input prompt using one or more generative models to generate action output indicative of one or more actions to be performed by the robot;

causing a robot control signal to be generated based on the one or more actions.

Example 2. The method of example 1, wherein the action output comprises a sequence of action tokens, and wherein the robot control signal is generated by detokenizing the sequence of action tokens to generate the one or more actions to be performed by the robot.

Example 3. The method of example 1, wherein determining the affordance plan comprises:

assembling, as an affordance input prompt, data indicative of the vision data and the natural language instruction; and

processing the affordance input prompt using one or more of the generative models to generate affordance output indicative of the affordance plan.

Example 4. The method of example 3, wherein the action input prompt is processed using an affordance-conditioned policy model and the affordance input prompt is processed using an affordance prediction model.

Example 5. The method of example 4, wherein the affordance-conditioned policy model is trained using behavior cloning.

Example 6. The method of example 1, wherein determining the affordance plan comprises receiving the affordance plan from a human.

Example 7. The method of example 6, wherein the affordance plan is received via manual demonstration by the human performing the task.

Example 8. The method of example 6, wherein the affordance plan is received via manual demonstration by the human operating the robot to perform the task.

Example 9. The method of example 6, wherein the affordance plan is received as a sequence of visual annotations incorporated into the vision data by the human.

Example 10. The method of any of the preceding examples, further comprising operating the robot based on the robot control signal.

Example 11. The method of example 10, wherein the robot is a physical robot.

Example 12. The method of example 10, wherein the robot is a simulated robot operating in a simulated environment.

Example 13. The method of example 1, wherein each intermediate representation of the sequence of intermediate representations of the robot in visual space is represented as a tokenized text value.

Example 14. The method of example 1, wherein each intermediate representation of the sequence of intermediate representations of the robot in visual space is represented as a visual annotation incorporated into the vision data.

Example 15. The method of example 14, further comprising incorporating the visual annotations of the affordance plan into the vision data.

Example 16. The method of example 14, wherein each visual annotation comprises a visual marker outline of an end effector of the robot.

Example 17. The method of example 16, wherein the end effector of the robot comprises a two-finger gripper.

Example 18. The method of example 1, wherein the vision data is captured using a vision sensor onboard the robot.

Example 19. The method of example 1, wherein the vision data is captured by a vision sensor that is separate from the robot.

Example 20. The method of example 1, wherein the vision data comprises a digital image captured by a digital camera.

Example 21. The method of example 1, wherein the vision data comprises a point cloud captured by a light detection and ranging (LIDAR) sensor.

Example 22. The method of example 1, wherein each intermediate representation of the sequence of intermediate representations of the robot in visual space comprises an end effector pose.

Example 23. A method of adapting an affordance-prediction model, the method implemented using one or more processors, comprising:

obtaining one or more tuples from a robot dataset, wherein each tuple includes:

vision data depicting an environment of a robot, a natural language instruction for the robot to perform a task, and

a labeled affordance plan for performing the task, wherein the labeled truth affordance plan comprises a sequence of intermediate representations of the robot in visual space;

based on each tuple of one or more of the tuples. assembling an input prompt that includes data indicative of the vision data of the tuple and the natural language instruction of the tuple;

processing the input prompt using the affordance-prediction model to generate output indicative of a predicted affordance plan;
comparing the labeled affordance plan with the predicted affordance plan; and
adapting the affordance prediction model based on the comparing.

Example 24. The method of example 23, wherein each intermediate representation of the sequence of intermediate representations of the robot in visual space is represented as a visual annotation incorporated into the vision data.

Example 25. The method of example 24, further comprising:

collecting a set of additional images, each additional image having a corresponding task label that indicates a task being performed in the image;
annotating each additional image with an affordance plan comprising a sequence of visual annotations that demonstrate performance of the task of the corresponding task label; and
further adapting the affordance prediction model based on the annotated additional images.

Example 26. The method of example 25, wherein the annotating is performed by processing the additional images using a vision language model (VLM).

Example 27. The method of example 25, wherein the annotating is performed by processing the additional images using a grasp planner.

Example 28. A method of adapting an affordance-condition policy model, the method implemented using one or more processors and comprising:

obtaining a dataset of robot trajectories, each trajectory including a natural language instruction for a robot to perform a task, a sequence of visual representations depicting a robot carrying out the task in an environment, a sequence of actions performed by the robot while carrying out the task, and a sequence of gripper states;
for each trajectory:

determining a respective affordance plan implemented in the robot trajectory;
assembling a training input prompt that includes the natural language instruction, one or more visual representations of the sequence of visual representations, and the respective affordance plan;
process the training input prompt using an affordance-conditioned policy model to generate output that includes one or more predicted actions;
comparing one or more of the predicted actions to one or actions of the sequence of actions associated with the trajectory; and
based on the comparing, adapting the affordance-conditioned policy model.

Example 29. The method of example 28, wherein the training or fine-tuning comprises behavior cloning.

Example 30. The method of example 28, wherein the affordance-conditioned policy model is further trained using one or more web datasets of images.

While several implementations have been described and illustrated herein, a variety of other means and/or structures for performing the function and/or obtaining the results and/or one or more of the advantages described herein are possible without departing from the scope of the invention. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

**Claims**

1. A method implemented using one or more processors and comprising:

based on vision data depicting an environment of a robot and a natural language instruction for the robot to perform a task, determining an affordance plan for performing the task, wherein the affordance plan comprises a sequence of intermediate representations of the robot in visual space;
assembling, as an action input prompt, data indicative of the vision data, the natural language instruction, and the affordance plan;
process the action input prompt using one or more generative models to generate action output indicative of one or more actions to be performed by the robot;
causing a robot control signal to be generated based on the one or more actions.

2. The method of claim 1, wherein the action output comprises a sequence of action tokens, and wherein the robot control signal is generated by detokenizing the sequence of action tokens to generate the one or more actions to be performed by the robot.

3. The method of claim 1 or claim 2, wherein determining the affordance plan comprises:

assembling, as an affordance input prompt, data indicative of the vision data and the natural language instruction; and
processing the affordance input prompt using one or more of the generative models to generate affordance output indicative of the affordance plan.

4. The method of claim 3, wherein the action input prompt is processed using an affordance-conditioned policy model and the affordance input prompt is processed using an affordance prediction model, and optionally wherein the affordance-conditioned policy model is trained using behavior cloning.

5. The method of claim 1 or claim 2, wherein determining the affordance plan comprises receiving the affordance plan from a human, and optionally wherein:

the affordance plan is received via manual demonstration by the human performing the task;
the affordance plan is received via manual demonstration by the human operating the robot to perform the task; or
the affordance plan is received as a sequence of visual annotations incorporated into the vision data by the human.

6. The method of any one of the preceding claims, further comprising operating the robot based on the robot control signal.

7. The method of any one of the preceding claims, wherein each intermediate representation of the sequence of intermediate representations of the robot in visual space is represented as a tokenized text value.

8. The method of any one of claims 1 to 6, wherein each intermediate representation of the sequence of intermediate representations of the robot in visual space is represented as a visual annotation incorporated into the vision data, and optionally wherein:

the method further comprises incorporating the visual annotations of the affordance plan into the vision data; and/or
each visual annotation comprises a visual marker outline of an end effector of the robot, optionally wherein the end effector of the robot comprises a two-finger gripper.

9. The method of any one of the preceding claims, wherein the vision data is captured using a vision sensor onboard the robot and/or wherein the vision data is captured by a vision sensor that is separate from the robot.

10. The method of any one of the preceding claims, wherein the vision data comprises a digital image captured by a digital camera, and/or wherein the vision data comprises a point cloud captured by a light detection and ranging (LIDAR) sensor.

11. The method of any one of the preceding claims, wherein each intermediate representation of the sequence of intermediate representations of the robot in visual space comprises an end effector pose.

12. A method of adapting an affordance-prediction model, the method implemented using one or more processors, comprising:
obtaining one or more tuples from a robot dataset, wherein each tuple includes:

vision data depicting an environment of a robot,
a natural language instruction for the robot to perform a task, and
a labeled affordance plan for performing the task, wherein the labeled truth affordance plan comprises a sequence of intermediate representations of the robot in visual space;
based on each tuple of one or more of the tuples.
assembling an input prompt that includes data indicative of the vision data of the tuple and the natural language instruction of the tuple;
processing the input prompt using the affordance-prediction model to generate output indicative of a predicted affordance plan;
comparing the labeled affordance plan with the predicted affordance plan; and
adapting the affordance prediction model based on the comparing.

13. The method of claim 12, wherein each intermediate representation of the sequence of intermediate representations of the robot in visual space is represented as a visual annotation incorporated into the vision data, and optionally wherein the method further comprises:

collecting a set of additional images, each additional image having a corresponding task label that indicates a task being performed in the image;
annotating each additional image with an affordance plan comprising a sequence of visual annotations that demonstrate performance of the task of the corresponding task label; and further adapting the affordance prediction model based on the annotated additional images.

14. A method of adapting an affordance-condition policy model, the method implemented using one or more processors and comprising:

obtaining a dataset of robot trajectories, each trajectory including a natural language instruction for a robot to perform a task, a sequence of visual representations depicting a robot carrying out the task in an environment, a sequence of actions performed by the robot while carrying out the task, and a sequence of gripper states;
for each trajectory:

determining a respective affordance plan implemented in the robot trajectory;
assembling a training input prompt that includes the natural language instruction, one or more visual representations of the sequence of visual representations, and the respective affordance plan;
process the training input prompt using an affordance-conditioned policy model to generate output that includes one or more predicted actions;
comparing one or more of the predicted actions to one or actions of the sequence of actions associated with the trajectory; and
based on the comparing, adapting the affordance-conditioned policy model.

15. The method of claim 14, wherein the training or fine-tuning comprises behavior cloning, and/or, wherein the affordance-conditioned policy model is further trained using one or more web datasets of images.

**Fig. 1**

**Fig. 2**

VQA **340**

Q: WHAT IS HAPPENING IN THIS IMAGE?
A: A GRAY DONKEY WALKS DOWN THE STREET

340A

342A

SPATIAL REASONING **342**

Q: WHERE ARE THE GRAPES?
A:

342B

348

ROBOT ACTION PREDICTION **344**

Q: WHAT SHOULD THE ROBOT DO TO PICK UP CHIPS?
A: Δ TRANSLATION=[0.4, -1.0, 0.1]
Δ ROTATION=[57, 17, -24]

344A

AFFORDANCE REASONING **346**
Q: WHAT AFFORDANCE SHOULD THE ROBOT FOLLOW TO PLACE APPLE INTO POT?
A:

346A

346B

**Fig. 3**

EP 4 725 657 A2

**AFFORDANCE REASONING 346**

450

Q: WHAT AFFORDANCE PLAN SHOULD THE ROBOT ALLOW TO <TASK>?

VLA 452

A: 138 29 16 197 31 312 12 49 183 47 94 178 19 10 6

**POLICY ACTION PREDICTION 454**

456

Q: WHAT ACTION SHOULD THE ROBOT DO TO <TASK>?

VLA 452

A: △TRANSLATION=[0.4,-1.0,0.1], △ROTATION=[57,17,-24]

**Fig. 4**

BASED ON VISION DATA DEPICTING AN ENVIRONMENT OF ROBOT AND NL INSTRUCTION FOR ROBOT TO PERFORM TASK, DETERMINE AFFORDANCE PLAN FOR PERFORMING TASK  **502**

ASSEMBLE, AS AFFORDANCE INPUT PROMPT, DATA INDICATIVE OF VISION DATA AND NL INSTRUCTION **502A**

PROCESS AFFORDANCE INPUT PROMPT USING GENERATIVE MODEL(S) TO GENERATE AFFORDANCE OUTPUT INDICATIVE OF AFFORDANCE PLAN **502B**

ASSEMBLE, AS ACTION INPUT PROMPT, DATA INDICATIVE OF VISION DATA, NL INSTRUCTION, AND AFFORDANCE PLAN **504**

PROCESS ACTION INPUT PROMPT USING GENERATIVE MODEL(S) TO GENERATE ACTION OUTPUT INDICATIVE OF ACTION(S) TO BE PERFORMED BY ROBOT **506**

CAUSE ROBOT CONTROL SIGNAL TO BE GENERATED BASED ON ACTION(S) **508**

CAUSE ROBOT TO BE OPERATED BASED ON ROBOT CONTROL SIGNAL **510**

**Fig. 5**

500

OBTAIN ONE OR MORE TUPLES FROM A ROBOT DATASET **602**

BASED ON EACH TUPLE OF THE ONE OR MORE TUPLES, ASSEMBLE AN INPUT PROMPT THAT INCLUDES DATA INDICATIVE OF THE VISION DATA OF THE TUPLE AND THE NATURAL LANGUAGE INSTRUCTION OF THE TUPLE **604**

PROCESS THE INPUT PROMPT USING THE AFFORDANCE-PREDICTION MODEL TO GENERATE OUTPUT INDICATIVE OF A PREDICTED AFFORDANCE PLAN **606**

COMPARE THE LABELED AFFORDANCE PLAN WITH THE PREDICTED AFFORDANCE PLAN **608**

ADAPT THE AFFORDANCE PREDICTION MODEL BASED ON THE COMPARING **610**

**Fig. 6**

600

OBTAIN A DATASET OF ROBOT TRAJECTORIES **702**

FOR EACH TRAJECTORY, DETERMINE A RESPECTIVE AFFORDANCE PLAN IMPLEMENTED IN THE ROBOT TRAJECTORY **704**

ASSEMBLE A TRAINING INPUT PROMPT THAT INCLUDES NATURAL LANGUAGE INSTRUCTION, VISUAL REPRESENTATION(S), AND RESPECTIVE AFFORDANCE PLAN **706**

PROCESS THE TRAINING INPUT PROMPT USING AN AFFORDANCE-CONDITIONED POLICY MODEL TO GENERATE OUTPUT THAT INCLUDES PREDICTED ACTION(S) **708**

COMPARE PREDICTED ACTION(S) TO ACTION(S) OF THE SEQUENCE ACTIONS ASSOCIATED WITH THE TRAJECTORY **710**

BASED ON THE COMPARING, ADAPT THE AFFORDANCE-CONDITIONED POLICY MODEL **712**

**Fig. 7**

700

EP 4 725 657 A2

810

STORAGE SUBSYSTEM

825          824

MEMORY SUBSYSTEM

832      830

ROM      RAM

826

FILE STORAGE
SUBSYSTEM

USER INTERFACE
INPUT DEVICES

822

812

814                    816              820

PROCESSOR(S)      NETWORK
INTERFACE        USER INTERFACE OUTPUT
DEVICES

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- RT-1: Robotics Transformer for Real-World Control at Scale. *arXiv:2212.06817*

- RT-2: Vision-Language-Action Models Transfer Web Knowledge to Robotic Control. *arXiv: 2307.15818*